# FASCICULE DE BREVET EUROPEEN

(11) **EP 0 772 361 B1**
(45) Date de publication et mention de la délivrance du brevet: **17.04.2002**
(21) Numéro de dépôt: 96402158.8
(22) Date de dépôt: 11.10.1996
(51) Int. Cl.: H04N 7/16, H04N 7/167

(54) **Procédé permettant la mise en cascade de modules d'accès conditionnel détachables, circuit d'insertion d'une séquence prédéfinie et circuit de détection de ladite séquence pour la mise en oeuvre du procédé**
Verfahren zur Hintereinanderschaltung von austauschbaren, bedingungsabhängigen Zugangsmodulen, Schaltung zur Eingabe einer vorbestimmten Reihenfolge und Schaltung zur Erkennung dieser Reihenfolge zum Starten dieses Verfahrens
Process for cascading detachable conditional access modules, circuit for inserting a predefined sequence and circuit for detecting this sequence allowing the process to start

(30) Priorité: 31.10.1995 FR 9512850
(43) Date de publication de la demande: 07.05.1997
(73) Titulaire: THOMSON multimedia, 92648 Boulogne Cédex (FR)
(72) Inventeur: De Vito, Mario, 92050 Paris La Défense Cedex (FR)
(74) Mandataire: Ruellan-Lemonnier, Brigitte

(56) Documents cités:
- EP-A- 0 562 295
- EP-A- 0 674 440
- GB-A- 2 261 580
- CABLE TV SESSIONS, MONTREUX, JUNE 10 - 15, 1993, no. SYMP. 18, 11 Juin 1993, POSTES;TELEPHONES ET TELEGRAPHES SUISSES, pages 761-769, XP000379391 VIGARIE J P: "A DEVICE FOR REAL-TIME MODIFICATION OF ACCESS CONDITIONS IN A D2-MAC/PACKET EUROCRYPT SIGNAL: THE TRANSCONTROLLER"
- CABLE TV SESSIONS, MONTREUX, JUNE 10 - 15, 1993, no. SYMP. 18, 11 Juin 1993, POSTES;TELEPHONES ET TELEGRAPHES SUISSES, pages 458-462, XP000379372 BOYER R: "DIGITAL BROACAST SATELLITE SYSTEM"

## Description

La présente invention concerne un procédé permettant la mise en cascade de modules d'accès conditionnel détachables. Elle concerne aussi un circuit d'insertion d'une séquence prédéfinie telle que décrite dans le procédé ainsi qu'un circuit de détection de cette séquence.

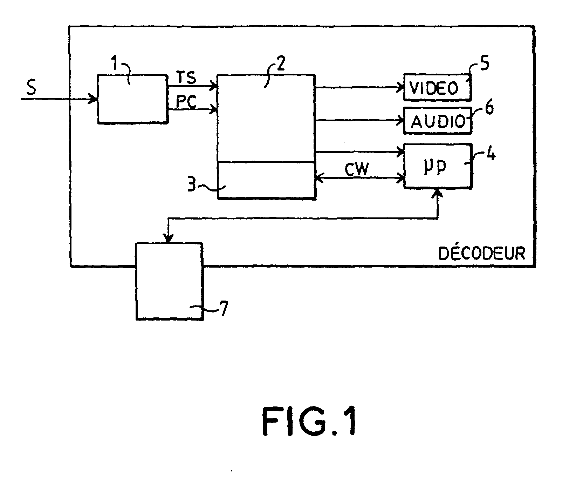

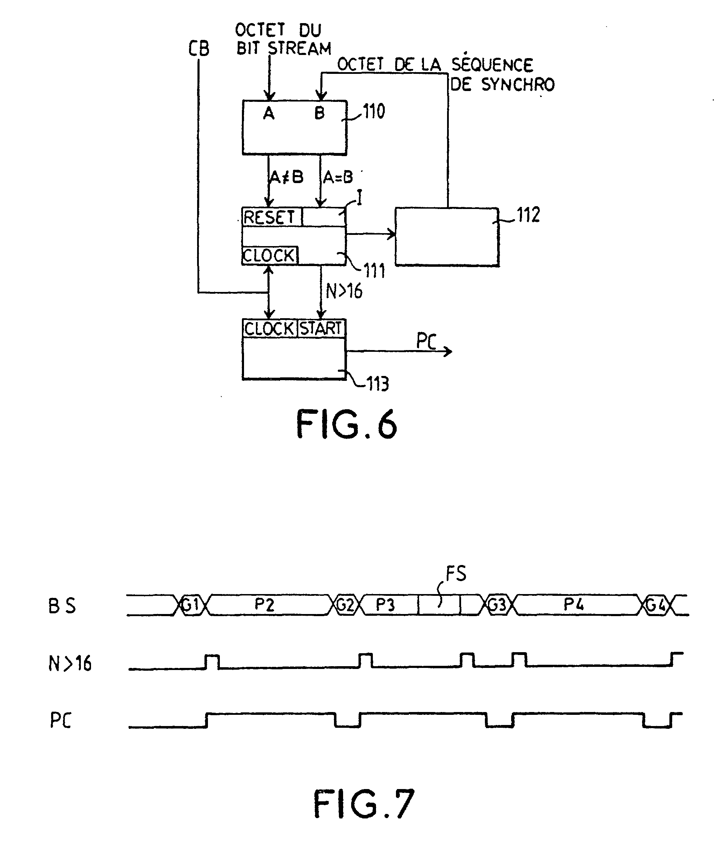

Dans le domaine de la télévision numérique à péage, les décodeurs actuellement sur le marché comportent, comme représenté schématiquement sur la figure 1, un circuit d'entrée 1 ou "front end" constitué entre autre d'un démodulateur, un démultiplexeur 2 associé à un désembrouilleur 3, un microprocesseur 4 connecté au désembrouilleur 3 pour notamment fournir le mot de contrôle ou "control word" CW, des circuits vidéo 5 et audio 6 connectés en sortie du démultiplexeur. Une carte à puce 7 comportant notamment des données autorisant l'accès aux programmes vient se connecter de manière connue au microprocesseur 4 du décodeur. Le décodeur reçoit en entrée un signal "multiplex" qui peut contenir un très grand nombre de programmes, certains étant en clair, d'autres étant embrouillés. Le signal vidéo est envoyé sur le circuit d'entrée 1 qui permet de récupérer en sortie un flux de données TS ou "transport stream" constitué de paquets de longueur fixe séparé par un espace interpaquet de longueur fixe, chaque paquet étant détecté par une horloge-paquet PC. Le rôle du démultiplexeur, du désembrouilleur, du microprocesseur et de la carte à puce est, notamment, de désembrouiller les paquets embrouillés appartenant au programme sélectionné pour lequel l'usager à un droit d'accès. Un système de ce type est décrit par exemple dans l'article "Digital Broadcast Satellite System" de Cable TV Sessions, Montreux June 10-15, 1993, no. SYMP.18, 11 Juin 1993, Postes; Téléphones et Télégraphes Suisses, pages 458-462, plus particulièrement fig. 5-0. Actuellement, les prestataires de service souhaitant émettre des programmes cryptés définissent les spécificités de leur propre décodeur, et en particulier celles de leur système de contrôle d'accès. Ces éléments spécifiques ou secrets du sous-système d'accès conditionnel empêchent sa normalisation.

Pour remédier à ces inconvénients et permettre la réalisation des futurs systèmes standards de réception de télévision numérique, il a été proposé d'isoler le sous-système d'accès conditionnel à l'intérieur d'un module détachable au format carte à puce ou au format PCMCIA.

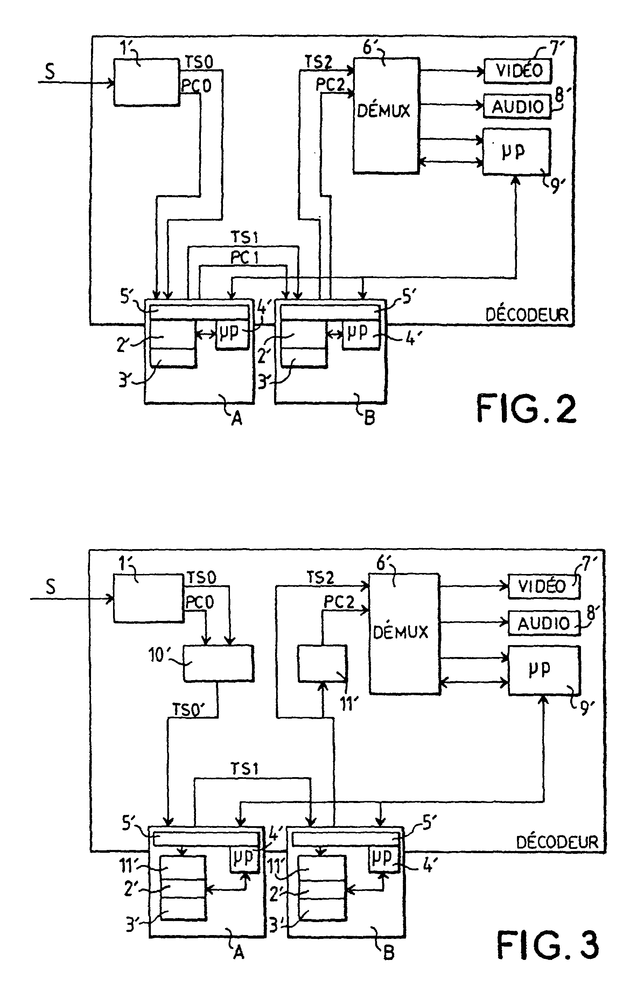

Dans ce cas, plusieurs modules détachables peuvent être connectés à un décodeur unique. L'intégralité du flux de données est obtenue en sortie du circuit d'entrée du décodeur et passe successivement à travers chaque module connecté en cascade. Chaque module permet de désembrouiller les paquets embrouillés qui le concerne. Ainsi, lorsque les informations d'accès conditionnel utilisées pour le programme sélectionné sont reconnues par le module et lorsque l'usager dispose du droit d'accès à ce programme, alors et seulement dans ces cas, les paquets correspondants du flux de données sont désembrouillés en conservant leur place relative. Un décodeur du type ci-dessus est représenté schématiquement à la figure 2. Le décodeur comporte un circuit d'entrée 1' qui reçoit le signal haute fréquence S, le démodule de manière à obtenir le flux de données TSO ou "transport stream" (en langue anglaise) et l'horloge-paquet PCL, et l'envoie ensuite en entrée du premier module détachable A. Chaque module détachable comporte, en outre, un démultiplexeur 2' associé à un désembrouilleur 3' et un microprocesseur 4'. Il peut être au format carte à puce ou au format d'un module PCMCIA tels que ceux existant dans le monde de la microinformatique. Le flux de données TS1 éventuellement désembrouillées en partie par les circuits ci-dessus, ressort du module décalé dans le temps par rapport au flux par une sortie dédiée, comme représenté sur l'interface 5'. Il est ensuite envoyé sur une entrée dédiée du second module détachable B où il subit un traitement identique et ainsi de suite en fonction du nombre de modules détachables susceptibles d'être connectés au décodeur. Le flux de données TS2 en sortie du dernier module est envoyé en entrée d'un démultiplexeur 6' dans le décodeur qui est connecté de manière connue aux circuits audio 8' et vidéo 7'. De plus, le décodeur comporte un microprocesseur 9' relié à chaque microprocesseur 4' se trouvant dans chaque module détachable ainsi qu'au démultiplexeur 6'. Comme mentionné ci-dessus, le flux de données en sortie d'un module est décalé dans le temps par rapport au flux de données en entrée, il est donc nécessaire d'avoir une horloge permettant de retrouver les données, comme dans le cas de décodeurs actuellement utilisés. D'autre part, le flux de données est divisé en paquets de bits de longueur fixe séparés entre eux par un espace de longueur fixe. Dans ce cas, une horloge-paquet PC0 est associée au flux des données pour indiquer le début et la fin d'un paquet. Cette horloge-paquet est, en général, utilisée au niveau du module détachable. Ainsi, en Europe, le projet d'interface commune prévoit une horloge-paquet entrante PC0-PC1 et une horloge-paquet sortante PC1-PC2, ce qui nécessite deux broches d'interface spécifiques, comme représenté sur la figure 2 qui correspond aux propositions DVB en cours de standardisation. Aux USA, le projet de module détachable prévoit une horloge-paquet à l'entrée du module, mais aucune horloge-paquet en sortie. Si cette proposition permet d'économiser une broche d'interface, elle présente comme inconvénient que le module détachable doit pouvoir fournir, au décodeur et éventuellement aux autres modules, une information sur le retard donné aux paquets du flux de données le traversant de telle sorte que le décodeur et les modules détachables puissent reconstruire l'horloge-paquet du flux de données réentrant par un décalage correct de l'horloge-paquet de référence.

La présente invention a pour but de remédier aux inconvénients ci-dessus en proposant un procédé qui permet de ne pas utiliser de broches spécifiques au niveau de l'interface module/décodeur, pour obtenir l'horloge-paquet dans chaque module et dans le décodeur.

La présente invention a pour objet un procédé permettant de générer un signal horloge lors de la mise en cascade de tout module chargé d'une fonction de traitement d'un signal multiplex formé de paquets de longueur fixe séparés par un espace de longueur fixe, caractérisé en ce qu'on remplit l'espace interpaquet par une séquence prédéfinie constante n'interférant pas avec le contenu utile des paquets, cette séquence étant utilisée pour régénérer un signal d'horloge-paquet.

Selon un mode de réalisation préférentiel, la séquence prédéfinie est constituée par une suite croissante ou décroissante de données binaires. De préférence, la séquence prédéfinie se continue par une donnée de valeur définie et identique se trouvant au début de tous les paquets.

La présente invention a aussi pour objet un circuit d'insertion de la séquence prédéfinie se trouvant en sortie du circuit d'entrée du décodeur. Le circuit comporte un multiplexeur recevant sur une première entrée le flux de données d'origine et sur une seconde entrée les données de la séquence prédéfinie issues d'un moyen générant la séquence prédéfinie, un détecteur de début de paquet et de fin de paquet permettant de sélectionner soit la première entrée, soit la seconde entrée.

La présente invention a encore pour objet un circuit de détection de la séquence prédéfinie se trouvant au niveau des modules et du décodeur. Ce circuit comporte :
- un comparateur recevant sur une première entrée le flux de données incorporant la séquence prédéfinie entre chaque paquet et sur une seconde entrée les données de la séquence prédéfinie ;
- un moyen pour générer les données de la séquence prédéfinie, ce moyen étant adressé par la sortie du comparateur de manière à envoyer la première donnée de la séquence prédéfinie lorsque le comparateur détecte une inégalité et à envoyer la donnée suivante de la séquence prédéfinie lorsque le comparateur détecte une égalité, et
- un moyen générant une impulsion correspondant à la longueur d'un paquet, ce dit moyen étant actionné par la détection de la dernière donnée de la séquence prédéfinie.

D'autres caractéristiques et avantages de la présente invention apparaîtront à la lecture de la description d'un mode de réalisation préférentiel, cette description pétant faite avec référence aux dessins ci-annexés, dans lesquels :
- la figure 1, déjà décrite, est un schéma sous forme de blocs d'un décodeur conforme à l'art antérieur ;
- la figure 2, déjà décrite, est un schéma sous forme de blocs d'un décodeur muni de modules détachables, selon l'art antérieur ;
- la figure 3 est un schéma sous forme de blocs d'un décodeur muni de modules détachables conforme à la présente invention ;
- la figure 4 est un schéma d'un circuit d'insertion conforme à la présente invention ;
- la figure 5 est un chronogramme expliquant le fonctionnement du circuit d'insertion ;
- la figure 6 est un schéma d'un circuit de détection, conforme à la présente invention, et
- la figure 7 est un chronogramme expliquant le fonctionnement du circuit de détection.

Pour simplifier la description, dans les figures, les mêmes références désignent les mêmes éléments.

Conformément à la présente invention, pour éviter d'utiliser au moins une broche dédiée à l'horloge-paquet PC0 au niveau de l'interface décodeur-module détachable, on utilise le fait que dans les systèmes actuellement définis aux US et en Europe, le flux de données TS est divisé en paquets de longueur fixe, les paquets étant séparés par un espace interpaquet lui aussi de longueur fixe. Ainsi, l'invention consiste à remplir cet espace interpaquet de longueur fixe par une séquence prédéfinie. Cette séquence est constante et n'interfère pas avec le contenu utile des paquets. Elle est utilisée pour régénérer l'horloge-paquet. De préférence, la séquence prédéfinie est constituée par une suite croissante ou décroissante de données binaires. Elle peut se continuer par une donnée de valeur définie et identique se trouvant dans tous les paquets, au début de ces paquets.

A titre d'exemple, dans le cas du standard Européen DVB en cours de discussion s'appuyant sur la norme MPEG2-system, le flux de données est divisé en paquets de 1504 bits (188 octets) séparés entre eux par un espace de 128 bits (16 octets). Si l'on remplit ces 16 octets avec la séquence continue allant de 0 à 15, un début de paquet est alors identifié par la succession de 16 octets prenant successivement une valeur croissante dans l'intervalle 0 à 15. La probabilité de détecter une fausse synchronisation vaut alors 5.10⁺³⁷. Cette probabilité est calculée avec l'hypothèse que la séquence ne peut pas être confondue partiellement avec une suite de même longueur du flux de données. D'autre part, le flux de données défini par la norme MPEG2-system présente un octet constant en début de paquet utilisé pour la synchronisation. Selon une autre caractéristique de l'invention, cet octet peut être inclu à la fin de la séquence prédéfinie afin de diminuer encore la probabilité de fausse détection. On a décrit l'utilisation d'une séquence prédéfinie constituée d'une suite d'octets croissante. Il est évident pour l'homme de l'art que toute séquence strictement monotone croissante ou décroissante est utilisable.

On décrira maintenant les modifications apportées au décodeur de la figure 2 pour mettre en oeuvre le procédé ci-dessus. Dans ce cas, le signal haute fréquence S en entrée du décodeur est envoyé sur un circuit d'entrée 1' identique à celui de la figure 2. En sortie de ce circuit d'entrée 1', on obtient, de manière connue, le flux de données TS0 et l'horloge-paquet PC0. Conformément à l'invention, le flux de données TS0 et l'horloge paquet PC0 sont envoyés sur un circuit 10 d'insertion d'une séquence prédéfinie qui sera décrit ci-après de manière plus détaillée. On obtient en sortie un flux de données TS0' incluant la séquence prédéfinie entre chaque paquet. Ce flux de données TS0' est envoyé sur une broche dédiée de l'interface 5' dans le premier module détachable A. Dans ce premier module A, il est traité par le circuit 11' de détection de la séquence prédéfinie de manière à obtenir l'horloge paquet nécessaire à la réalisation des opérations effectuées par le démultiplexeur 2', le désembrouilleur 3' et le microprocesseur 4' qui ont les mêmes fonctions que dans le mode de réalisation de la figure 2. Ces fonctions ne font pas partie de la présente invention et ne seront donc pas décrites plus en détail. Une fois traité, le nouveau flux de données TS1 est envoyé par une sortie dédiée de l'interface en entrée du second module détachable B identique au premier module détachable A en ce qui concerne sa structure. Il comporte donc une interface 5', un circuit 11' de détection de la séquence prédéfinie, un démultiplexeur 2', un désembrouilleur 3', un microprocesseur 4'. Le flux de données TS1 subit dans le module B un traitement similaire à celui subit dans le module A. Le nouveau flux de données TS2 est alors envoyé dans le décodeur dans le mode de réalisation représenté à deux modules détachables. Le flux de données TS2 est alors envoyé en entrée du démultiplexeur 6' et en entrée d'un circuit 11' de détection de la séquence prédéfinie identique à celui des modules détachables de manière à récupérer l'horloge-paquet PC2 qui est envoyée sur le démultiplexeur 6'. Les autres circuits, à savoir le circuit vidéo 7', le circuit audio 8', le microprocesseur 9' sont identiques aux circuits du décodeur de la figure 2 et fonctionnent de la même manière.

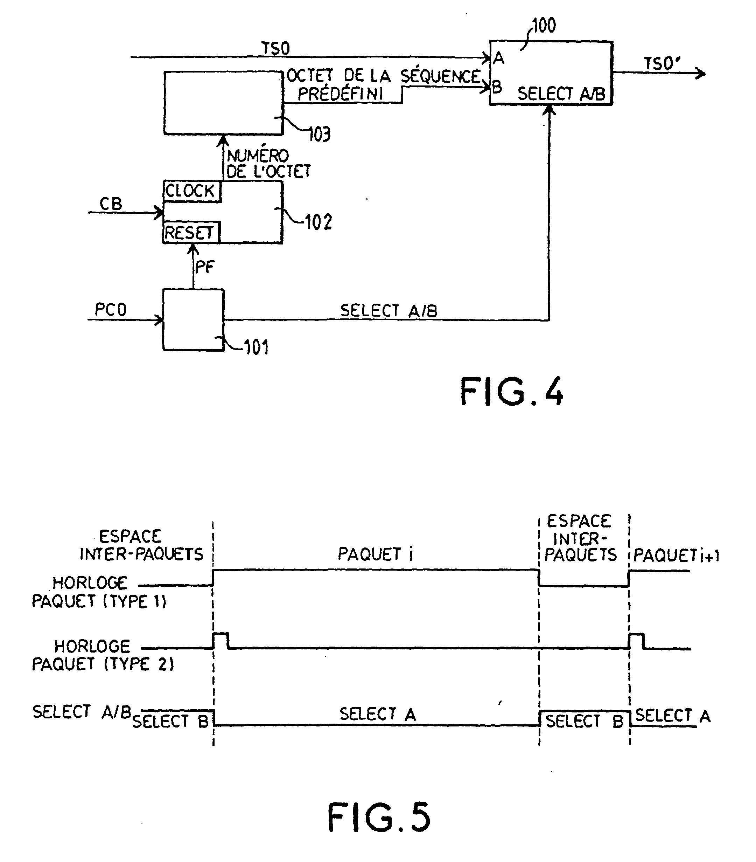

On décrira maintenant avec référence aux figures 4 et 5 un mode de réalisation du circuit 10' d'insertion de la séquence prédéfinie. Comme représenté sur la figure 4, le circuit comporte un multiplexeur 100 qui reçoit sur une entrée A les octets du flux de données d'origine TS0. Il reçoit sur son autre entrée B les octets de la séquence prédéfinie. Le passage de l'entrée A sur l'entrée B et vice et versa est déterminé par une impulsion de sélection Select A/B qui est obtenue à partir d'un circuit 101 de détection de frontière de paquet qui reçoit en entrée l'horloge-paquet PC0. L'octet de la séquence prédéfinie peut être obtenue de différentes manières. Ainsi, dans le mode de réalisation représenté à la figure 4, le circuit comporte un compteur 102 comptant de 1 à 16 au rythme de l'horloge CB ou horloge octet. Le compteur comporte une entrée remise à 1 RESET qui est actionnée par une impulsion de fin de paquet PF issue du circuit 101 de détection de début et de fin de paquets. A chaque impulsion d'horloge, le compteur 102 envoie une information qui correspond au numéro de l'octet dans la séquence vers une table 103 qui contient les différentes valeurs des paquets, l'impulsion Select A/B est au niveau logique "0" et l'entrée A du multiplexeur 100 est sélectionnée de manière à laisser passer les octets du flux de données d'origine TS0. L'on obtient ainsi en sortie du multiplexeur un flux de données TS0' avec insertion d'une séquence prédéfinie. On décrira maintenant avec référence aux figures 6 et 7 un mode de réalisation d'un circuit 11' de détection de la séquence prédéfinie. Le circuit comporte donc un comparateur 110 qui reçoit sur son entrée A les octets du flux de données munis de la séquence prédéfinie tel que TS0, TS1, TS2 et sur son entrée B, les octets de la séquence prédéfinie provenant d'un circuit définissant la séquence prédéfinie. Dans le mode de réalisation de la figure 6, ce circuit est constitué par un compteur 111 qui compte à la fréquence d'horloge octet. En effet, l'horloge octet CB est appliquée sur l'entrée "clock" du compteur 111. D'autre part, le compteur reçoit sur son entrée I la sortie du comparateur lorsque A=B et sur son entrée Reset la sortie du comparateur lorsque A≠B. Dans le mode de réalisation représenté, le compteur compte entre 1 et 16. La sortie du compteur est envoyée comme adresse sur une table 112 qui contient la valeur des octets de la séquence prédéfinie. L'octet de la séquence prédéfinie correspondant au numéro d'octet issu du compteur est envoyé sur l'entrée B du comparateur 110. Lorsque le compteur dépasse la valeur 16, il envoie une impulsion N > 16 sur l'entrée "start" d'un générateur d'impulsion 113 qui est en fait constitué par un monostable de longeur 188 octets, ce générateur donnant en sortie l'horloge-paquet PC.

Le fonctionnement du circuit sera mieux compris à l'aide du chronogramme de la figure 7. Sur cette figure, BS correspond au flux de données TS0', TS1, TS2 muni de la séquence prédéfinie. Lors du démarrage du système, le compteur est mis à 1. L'octet courant en provenance du flux de données est comparé à l'octet de la séquence prédéfinie dont le rang est donné par le compteur. Si A≠B, le compteur est remis à 1, si A=B le compteur est incrémenté. Lorsque le compteur atteint la valeur 17, il envoie une impulsion représentée par N > 16 sur la figure 7 qui déclenche le monostable 113 comme représenté par PC sur la figure 7. Toutefois, comme le monostable ne peut pas être remis à zéro et que son impulsion a une durée correspondant à un paquet, soit 188 cycles d'horloge octet CB dans le mode de réalisation représenté, aucune autre détection de séquence prédéfinie ne peut redéclencher le générateur 113. Ainsi, comme représenté sur la figure 7, la fausse séquence FS déclenche une impulsion N > 16, mais cette impulsion n'affecte pas l'horloge-paquet PC.

Il est évident pour l'homme de l'art que les circuits générant la séquence prédéfinie peuvent être modifiés, comme mentionné pour le circuit d'insertion de ladite séquence. On peut utiliser la valeur en sortie du compteur comme valeur de l'octet de la séquence prédéfinie ou un autre moyen d'adressage de la table qui peut être réalisée par tout type de mémoire.

D'autre part, le procédé de la présente invention peut aussi s'appliquer à tout module chargé d'une fonction de traitement d'un multiplex formé de paquets de longueur fixe séparés par un espace de longueur fixe.

## Revendications

1. Procédé permettant de générer un signal horloge lors de la mise en cascade de tout module chargé d'une fonction de traitement d'un signal multiplex formé de paquets de longueur fixe séparés par un espace de longueur fixe, **caractérisé en ce qu'**on remplit l'espace interpaquet par une séquence prédéfinie constante n'interférant pas avec le contenu utile des paquets, cette séquence étant utilisée pour regénérer un signal d'horloge-paquet.

2. Procédé selon la revendication 1, **caractérisé en ce que** la séquence prédéfinie est constituée par une suite croissante ou décroissante de données binaires.

3. Procédé selon la revendication 2, **caractérisé en ce que** la séquence prédéfinie se continue par une donnée de valeur définie et identique se trouvant au début de tous les paquets.

4. Circuit d'insertion de la séquence prédéfinie pour la mise en oeuvre du procédé selon l'une des revendications 1 à 3, le circuit comportant un multiplexeur (100) recevant sur une première entrée le flux de données d'origine (TSO) et sur une seconde entrée les données de la séquence prédéfinie issues d'un moyen (102, 103) générant la séquence prédéfinie, un détecteur (101) de début de paquet et de fin de paquet permettant de sélectionner soit la première entrée, soit la seconde entrée.

5. Circuit d'insertion selon la revendication 4, **caractérisé en ce que** le moyen générant la séquence prédéfinie est constituée par une mémoire (103) contenant, à des adresses successives, les différentes données de la séquence prédéfinie, les adresses étant incrémentées à chaque cycle d'horloge octet et étant remises à l'adresse de début à chaque fin de paquet.

6. Circuit d'insertion selon la revendication 5, **caractérisé en ce que** l'adressage de la mémoire est réalisé par un compteur (102) incrémenté de 1 à chaque cycle d'horloge-paquet et remis à 1 à chaque fin de paquet.

7. Circuit d'insertion selon la revendication 4, **caractérisé en ce que** le moyen générant la séquence prédéfinie est constitué par un compteur remis en valeur de départ de la séquence prédéfinie à chaque fin de paquet et incrémenté de 1 à chaque cycle d'horloge octet.

8. Circuit de detection de la séquence prédéfinie pour la mise en oeuvre du procédé selon les revendications 1 à 3, le circuit comportant:
- un comparateur (110) recevant sur une première entrée le flux de données incorporant la séquence prédéfinie entre chaque paquet et sur une seconde entrée les données de la séquence prédéfinie ;
- un moyen (111, 112) pour générer les données de la séquence prédéfinie, ce moyen étant adressé par la sortie du comparateur de manière à envoyer la première donnée de la séquence prédéfinie lorsque le comparateur détecte une inégalité et à envoyer la donnée suivante de la séquence prédéfinie lorsque le comparateur détecte une égalité, et
- un moyen (113) générant une impulsion correspondant à la longueur d'un paquet, ce dit moyen étant actionné par la détection de la dernière donnée de la séquence prédéfinie.

9. Circuit selon la revendication 8, **caractérisé en ce que** les moyens pour générer les données de la séquence prédéfinie sont constitués par une table (112) contenant à des adresses successives les différentes données de la séquence prédéfinie, l'adressage de cette table étant mis à la première adresse chaque fois que le comparateur (110) détecte une inégalité et incrémenté ou décrémenté à chaque fois que le comparateur détecte une inégalité, la table étant associée avec un moyen (111) émettant une impulsion (N > 16) lorsque toutes les adresses de la table ont été balayées.

10. Circuit selon la revendication 9, **caractérisé en ce que** l'adressage est réalisé par un compteur (111) remis à 1 à l'adresse de départ, chaque fois que le comparateur détecte une inégalité et incrémenté ou décrémenté à chaque fois que le comparateur détecte une égalité, la sortie du compteur adressant la table (112) et le compteur étant incrémenté ou décrémenté dans une plage de valeurs limitées et émettant une impulsion en fin de plage (N > 16).

11. Circuit **caractérisé en ce que** les moyens pour générer les données de la séquence prédéfinie sont constitués par un compteur selon la revendication 10, dont la sortie donne directement les valeurs de l'octet de la séquence prédéfinie.

12. Circuit selon l'une quelconque des revendications 8 à 11, **caractérisé en ce que** le moyen (113), pour générer une impulsion correspondant à la longueur d'un paquet, est constitué par un monostable qui ne peut pas être remis à zéro.

## Claims

1. Method for generating a clock signal when cascading modules, processing a multiplex signal, formed by packets of fixed length separated by a space of fixed length, **characterised in that** the interpacket space is filled with a constant predetermined sequence which does not interfere with the useful content of the packets, this sequence being used to regenerate a packet clock signal.

2. Method according to Claim 1, **characterised in that** the predetermined sequence consists of an increasing or decreasing series of binary data.

3. Method according to Claim 2, **characterised in that** the predetermined sequence is continued by a data item of defined and identical value located at the start of all the packets.

4. Circuit for inserting the predetermined sequence for implementing the method according to one of the claims 1 to 3, the circuit including a multiplexer (100) receiving at a first input the original data stream (TS0) and at a second input the data of the predetermined sequence coming from a means (102, 103) generating the predetermined sequence, a start of packet and end of packet detector (101) enabling either the first input or the second input to be selected.

5. Insertion circuit according to Claim 4, **characterised in that** the means generating the predetermined sequence consists of a memory (103) containing, at successive addresses, the different data of the predetermined sequence, the addresses being incremented at each octet clock cycle and being resent to the starting address at each end of packet.

6. Insertion circuit according to Claim 5, **characterised in that** the addressing of the memory performed by a counter (102) incremented by 1 at each packet clock cycle and reset to 1 at each end of packet.

7. Insertion circuit according to Claim 4, **characterised in that** the means generating the predetermined, sequence consists of a counter reset to the initial value of the predetermined sequence at each end of packet and incremented by 1 at each octet clock cycle.

8. Circuit for detecting the predetermined sequence for implementing the method according to Claims 1 to 3, the circuit including :
- a comparator (110) receiving, at a first input, the data stream incorporating the predetermined sequence between each packet and, at a second input, the data of the predetermined sequence;
- a means (111, 112) for generating the data of the predetermined sequence, this means being addressed by the output of the comparator so as to send the first data item of the predetermined sequence when the comparator detects inequality and to send the following data item of the predetermined sequence when the comparator detects equality, and
- a means (113) generating a pulse corresponding to the length of a packet, this said means being activated by the detection of the last data item in the predetermined sequence.

9. Circuit according to Claim 8, **characterised in that** the means for generating the data of the predetermined sequence consists of a table (112) containing, at successive addresses, the various data of the predetermined sequence, the addressing of this table being set to the first address each time the comparator (110) detects inequality and incremented or decremented each time the comparator detects equality, the table being associated with a means (111) sending a pulse (N > 16) when all the addresses of the tables have been scanned.

10. Circuit according to Claim 9, **characterised in that** the addressing is performed by a counter (111) reset to 1 at the initial address each time the comparator detects inequality, and incremented or decremented each time the comparator detects equality, the output of the comparator addressing the table (112) and the counter being incremented or decremented in a range of limited values and sending a pulse at the end of the range (N > 16).

11. Circuit according to Claim 10, **characterised in that** the means for generating the data of the predetermined sequence consist of a counter whose output directly gives the values of the octet of the predetermined sequence.

12. Circuit according to any one of Claims 8 to 11, **characterised in that** the means (113) for generating a pulse corresponding to the length of a packet consists of a monostable multivibrator which cannot be reset to zero.

## Patentansprüche

1. Verfahren zum Erzeugen eines Taktsignals bei einer Kaskadenanordnung von Modulen, die ein Multiplexsignal verarbeiten, das aus Paketen mit fester Länge besteht, die durch einen Zwischenraum mit fester Länge voneinander getrennt sind, **dadurch gekennzeichnet, daß**
der Paketzwischenraum mit einer konstanten, vorbestimmten Folge ausgefüllt wird, die keine Störung mit dem Nutzinhalt der Pakete bewirkt, und daß diese Folge zum Regenerieren eines Paket-Taktsignals dient.

2. Verfahren nach Anspruch 1, **dadurch gekennzeichnet, daß** die vorbestimmte Folge durch eine zunehmende oder abnehmende Folge von binären Daten gebildet ist.

3. Verfahren nach Anspruch 2, **dadurch gekennzeichnet, daß** die vorbestimmte Folge durch ein Datenwort mit einem vorbestimmten und identischem Wert fortgesetzt wird, der beim Beginn aller Pakete liegt.

4. Schaltung zur Einfügung einer vorbestimmten Folge für die Durchführung des Verfahrens nach einem der Ansprüche 1 bis 3, wobei die Schaltung einen Multiplexer (100) enthält, der an einem ersten Eingang den ursprünglichen Datenstrom (TSO) und an einem zweiten Eingang die Daten der vorbestimmten Folge von den Mitteln (102, 103) empfängt, die die vorbestimmte Folge erzeugen, und wobei ein Detektor (101) für den Beginn des Pakets und das Ende des Pakets die Wahl entweder des ersten Eingangs oder des zweiten Eingangs ermöglicht.

5. Schaltung zur Einfügung nach Anspruch 4, **dadurch gekennzeichnet, daß** die Mittel zum Erzeugen der vorbestimmten Folge durch einen Speicher (103) gebildet sind, der bei aufeinander folgenden Adressen die verschiedenen Daten der vorbestimmten Folge enthält, und daß die Adressen bei jedem Byte einer Taktperiode inkrementiert werden und bei jedem Paketende auf die Startadresse zurückgesetzt werden.

6. Schaltung zum Einfügen nach Anspruch 5, **dadurch gekennzeichnet, daß** die Adressierung des Speichers durch einen Zähler (102) erfolgt, der bei jeder Pakettaktperiode um 1 inkrementiert und bei jedem Paketende auf 1 zurückgesetzt wird.

7. Schaltung zum Einfügen nach Anspruch 4, **dadurch gekennzeichnet, daß** die Mittel zum Erzeugen der vorbestimmten Folge durch einen Zähler gebildet sind, der bei jedem Paketende auf den Ausgangswert der vorbestimmten Folge zurückgesetzt und bei jedem Byte der Taktperiode um 1 inkrementiert wird.

8. Schaltung zur Detektion der vorbestimmten Folge für die Durchführung des Verfahrens nach Anspruch 1 bis 3 mit folgenden Merkmalen:
- einem Komparator (110), der an einem ersten Eingang den Datenstrom empfängt, der die vorbestimmte Folge zwischen jedem Paket enthält, und an einem zweiten Eingang die Daten der vorbestimmten Folge empfängt,
- einem Mittel (111, 112) zum Erzeugen der Daten der vorbestimmten Folge, wobei dieses Mittel durch den Ausgang des Komparators derart adressiert wird, daß die ersten Daten der vorbestimmten Folge gesendet werden, wenn der Komparator eine Ungleichheit detektiert, und die folgenden Daten der vorbestimmten Folge gesendet werden, wenn der Komparator eine Gleichheit detektiert, und
- einem Mittel (113) zum Erzeugen eines Impulses, der der Länge eines Pakets entspricht, wobei dieses Mittel durch die Detektion des letzten Datenwortes in der vorbestimmten Folge aktiviert wird.

9. Schaltung nach Anspruch 8, **dadurch gekennzeichnet, daß** die Mittel zum Erzeugen der Daten der vorbestimmten Folge durch eine Tabelle (112) gebildet sind, die bei aufeinanderfolgenden Adressen die verschiedenen Daten der vorbestimmten Folge enthält, und daß die Adressierung dieser Tabelle jedes Mal auf die erste Adresse gesetzt wird, wenn der Komparator (100) eine Ungleichheit detektiert und inkrementiert oder dekrementiert, jedesmal, wenn der Komparator (100) eine Ungleichheit detektiert, und der Tabelle ein Mittel (111) zugeordnet ist, das einen Impuls (N > 16) sendet, wenn alle Adressen der Tabelle abgetastet worden sind.

10. Schaltung nach Anspruch 9, **dadurch gekennzeichnet, daß** die Adressierung durch einen Zähler (111) erfolgt, der bei der Ausgangsadresse jedesmal auf 1 zurückgesetzt wird, wenn der Komparator eine Ungleichheit detektiert, und jedesmal inkrementiert oder dekrementiert, wenn der Komparator eine Gleichheit detektiert, und daß der Ausgang des die Tabelle (112) adressierenden Zählers und der Zähler in einem Bereich von begrenzten Werten inkrementiert oder dekrementiert wird und am Ende des Bereichs (N > 16) einen Impuls sendet.

11. Schaltung, **dadurch gekennzeichnet, daß** die Mittel zum Erzeugen der Daten der vorbestimmten Folge durch einen Zähler nach Anspruch 10 gebildet sind, dessen Ausgang direkt die Werte des Byte der vorbestimmten Folge liefert.

12. Schaltung nach einem der Ansprüche 8 bis 11, **dadurch gekennzeichnet, daß** das Mittel (113) zum Erzeugen eines Impulses, der der Länge eines Pakets entspricht, durch einen monostabilen Multivibrator gebildet ist, der nicht auf null zurückgesetzt werden kann.
